## Europäisches Patentamt

## European Patent Office

## Office européen des brevets

(19)

(11) Numéro de publication: **0 201 948**
**B1**

(12)

# FASCICULE DE BREVET EUROPEEN

(45) Date de publication du fascicule du brevet:
05.07.89

(51) Int. Cl.⁴: **C 08 G 2/22**, C 08 G 2/24

(21) Numéro de dépôt: **86200563.4**

(22) Date de dépôt: **03.04.86**

(54) Copolymères oxyméthyléniques et procédé pour leur préparation.

(30) Priorité: **15.04.85 FR 8505756**

(43) Date de publication de la demande:
**20.11.86 Bulletin 86/47**

(45) Mention de la délivrance du brevet:
**05.07.89 Bulletin 89/27**

(84) Etats contractants désignés:
**AT BE DE FR GB IT NL**

(56) Documents cités:
**FR-A- 1 477 133**
**US-A- 3 397 181**

(73) Titulaire: **SOLVAY & Cie (Société Anonyme), Rue du Prince Albert, 33, B-1050 Bruxelles (BE)**

(72) Inventeur: **Collart, André, Avenue Beaudouin, 1, B-1330 Rixensart (BE)**
Inventeur: **Declerck, Fredy, Snoekgracht, 7, B-1850 Grimbergen (BE)**

ACTORUM AG

## Description

La présente invention concerne des copolymères oxyméthyléniques. Elle concerne plus particulièrement des copolymères contenant des unités récurrentes oxyméthyléniques de stabilité thermique améliorée. Elle concerne également un procédé de préparation de ces copolymères.

Des polyoxyméthylènes ou polyacétals comprenant des enchaînements de motifs récurrents -CH$_2$O- sont connus depuis de nombreuses années. On peut les fabriquer par polymérisation du formaldéhyde anhydre ou de son trimère cyclique, le trioxane.

Les homopolymères de polyoxyméthylène à haut poids moléculaire présentent en général de très bonnes propriétés mécaniques, un large domaine de températures d'utilisation, une bonne résistance aux agents chimiques qui en font un matériau de choix pour la confection d'objets moulés trouvant des débouchés dans les domaines de la mécanique de précision, de l'industrie automobile, de l'industrie électrique et de l'équipement électroménager. Toutefois, ces homopolymères sont caractérisés par une instabilité thermique relative, qui entraîne leur dégradation avec dégagement de formaldéhyde, lorsqu'il sont exposés de manière prolongée à des températures élevées, notamment au cours de leur mise en oeuvre.

On a déjà tenté de pallier cet inconvénient en fabriquant des polyoxyméthylènes modifiés contenant, en association avec des groupements oxyméthyléniques, d'autres groupes oxyalkyléniques. Pareils polyoxyméthylènes modifiés, de stabilité thermique supérieure à celle de l'homopolymère correspondant, ont été obtenues en copolymérisant le trioxane avec d'autres éthers cycliques, tels que par exemple l'oxyde d'éthylène, le dioxane et le dioxolane (brevet FR-A-1 221 148 de CELANESE CORP.).

On a également préparé des copolymères de stabilité thermique élevée contenant des unités récurrentes oxyméthyléniques et 2-chlorométhyloxyéthyléniques, par copolymérisation du trioxane avec un comonomère choisi parmi l'épichlorhydrine et le 4-chlorométhyl-1,3-dioxolane (brevet US-A-3 072 609).

La présente invention vise à fournir de nouveaux copolymères de stabilité thermique encore améliorée.

L'invention concerne à cet effet des copolymères contenant des unités récurrentes oxyméthyléniques et des unités récurrentes 2-fluorométhyloxyéthyléniques.

Les nouveaux copolymères selon l'invention contiennent des unités récurrentes oxyméthyléniques (-CH$_2$O-) [appelées ci-après groupes (A)] et des unités récurrentes 2-fluorométhyloxyéthyléniques (-OCH$_2$-CH-) [appelées ci-après groupes (B)].

$$\begin{array}{c} | \\ CH_2F \end{array}$$

La proportion molaire de groupes (B) présente dans les copolymères selon l'invention est généralement comprise entre 0,05 et 20%, de préférence entre 0,1 et 10% molaires.

Outre les groupes (A) et les groupes (B), les copolymères selon l'invention peuvent contenir d'autres unités structurelles récurrentes, en particulier des unités récurrentes oxyalkyléniques contenant au moins deux atomes de carbone [appelées ci-apres groupes (C)], telles que par exemple des groupes oxyéthyléniques (-OCH$_2$-CH$_2$). Ces unités peuvent être incorporées dans le copolymère par addition, au mélange réactionnel conduisant, selon le procédé de préparation décrit ci-après, aux copolymères contenant les groupes (A) et (B), d'un termonomère qui est un éther cyclique dont la molécule contient au moins deux atomes de carbone adjacents, tels que l'oxyde d'éthylène, le 1,3-dioxane et le 1,3,6-trioxocane par exemple.

Lorsque des groupes (C) sont incorporés dans les copolymères selon l'invention, leur proportion molaire y est généralement comprise entre 0,05 et 20% molaires, et les proportions molaires cumulées de groupes (B) et de groupes (C) dans le copolymère n'excède en général pas 30% molaires.

D'excellents résultats au point de vue de la stabilité thermique on été enregistrés avec des copolymères substantiellement constitués de 99,5 à 95% molaires de groupes (A) et de 0,5 à 5% de groupes (B). Ces copolymères se caractérisent par une répartition remarquablement régulière des groupes (B) le long des chaînes macromoléculaires, cette répartition étant favorable à leurs propriétés mécaniques.

Les poids moléculaires moyens des copolymères selon l'invention sont appréciés via leurs valeurs de viscosité inhérente ($\eta$) mesurée à 60°C dans le p-chlorophénol contenant 2% en poids d'$\alpha$-pinène; ces valeurs sont généralement comprises entre 0,5 et 8 dl/g et, de préférence entre 1,5 et 5 dl/g.

La stabilité thermique des copolymères selon l'invention est appréciée par le caractère plus ou moins thermolabile des extrémités de ces chaînes macromoléculaires et est connue sous le nom de «stabilité base» par les spécialistes. La détermination de cette «stabilité base» peut être effectuée comme décrit par exemple dans le brevet US-A-4 035 338 de UBE Industries Ltd., colonne 6, lignes 15 à 35. Cette détermination implique l'introduction d'un échantillon de 10 g du copolymère dans 100 ml d'une solution d'alcool benzylique contenant 1% en volume de tri-n-butylamine, le chauffage du mélange pendant 2 heures à 160°C, le refroidissement et la séparation du copolymère précipité. Le rapport entre le poids de copolymère recueilli après lavage à l'acétone et le poids de copolymère introduit, exprimé en %, représente la «stabilité base» dudit copolymère.

On a constaté avec surprise que la «stabilité base» des copolymères selon l'invention est supérieure à celle des copolymères comparables de l'art antérieur contenant les mêmes proportions d'unités récurrentes oxyméthyléniques et 2-chloromethyloxyéthyléniques.

L'invention concerne également un procédé pour la préparation de copolymères oxyméthyléniques, par copolymérisation du trioxane avec une quantité appropriée d'au moins un comonomère choisi parmi les dérivés d'éthers cycliques dont la molécule contient au moins deux atomes de carbone adjacents et dont un groupement oxyméthylénique porte un substituant fluorométhyle.

Parmi les comonomères répondant à cette définition, on peut citer l'épifluorhydrine et le 4-fluorométhyl-1,3-dioxolane, le comonomère particulièrement préféré étant l'épifluorhydrine.

La copolymérisation est effectuée, de manière connue, en présence d'un catalyseur à base d'un complexe de coordination de fluorure de bore avec un composé oxygéné organique contenant un atome électrodonneur tel que l'oxygène ou le soufre. A titre de composés oxygénés organiques utilisables pour créer le complexe de coordination avec le fluorure de bore, on peut citer les alcools, les phénols, les éthers, les acides, les anhydrides d'acides, les esters, les cétones, les aldéhydes, les sulfures de dialkyle et les mercaptans. Les catalyseurs préférés sont les éthérates de fluorure de bore, plus particulièrement les complexes de coordination du fluorure de bore avec l'éther diéthylique.

Généralement, le catalyseur est présent dans le milieu de copolymérisation en concentration telle que la teneur en fluorure de bore soit comprise entre 0,001 et environ 1% en poids, de préférence entre environ 0,003 et environ 0,1% en poids par rapport au poids de trioxane présent dans ce milieu.

Le trioxane et le (ou les) comonomère(s) choisi(s) sont généralement introduits dans le milieu de copolymérisation sous forme aussi anhydre et aussi pure que possible, ce qui permet d'obtenir des copolymères de haut poids moléculaire moyen avec un meilleur rendement.

La copolymérisation peut être effectuée en l'absence ou en présence d'un solvant organique anhydre inerte vis-à-vis des monomères.

Lorsqu'on effectue la copolymérisation en l'absence de solvant organique, on opère le plus généralement au sein du trioxane à l'état fondu dans lequel on a dissous le(s) comonomère(s) et le catalyseur. De préférence, toutefois, on effectue la copolymérisation en présence d'un solvant organique dans lequel le trioxane est au moins partiellement soluble. Ce solvant organique est généralement choisi parmi les hydrocarbures aliphatiques, cycloaliphatiques et aromatiques.

A titre d'exemples d'hydrocarbures aliphatiques, on peut mentionner les alkanes, tels que le n-hexane, le n-heptane, le n-octane, le n-nonane, leurs isomères et mélanges.

A titre d'exemples d'hydrocarbures cycloaliphatiques, on peut mentionner les cycloalkanes, tels que le cyclohexane.

A titre d'exemples d'hydrocarbures aromatiques, on peut mentionner le benzène et ses dérivés de substitution tel que le toluène et les xylènes.

On préfère en général effectuer la copolymérisation en présence d'un alkane ou d'un mélange d'alkanes contenant de 7 à 9 atomes de carbone qui, dans certaines conditions de concentration et de température, conduisent à un mélange biphasique, dont la phase légère est essentiellement constituée de l'alkane contenant un peu de trioxane et dont la phase lourde, qui est le site préférentiel de la copolymérisation, est très riche en trioxane.

La copolymérisation est généralement effectuée à une température comprise entre 0 et 100°C, de préférence entre 30 et 80°C, pendant une durée généralement comprise entre environ 5 minutes et environ 48 heures, et de préférence entre 30 minutes et 20 heures.

Lorsqu'on effectue la copolymérisation en présence d'un solvant organique tel que mentionnée plus haut, la concentration initiale en trioxane du milieu est généralement comprise entre 0,5 et 200% en poids par rapport au poids de solvant, de préférence entre 10 et 150% en poids. La concentration initiale en comonomère du milieu est déterminée en fonction de la proportion dans laquelle on souhaite l'incorporer dans le copolymère final.

Cette concentration peut être ajustée en prenant en compte la réactivité du comonomère choisi et son taux d'incorporation dans le copolymère, déterminés par des essais de routine préalables. En général, cette concentration en comonomère est compris entre 0,1 et 50% molaires, de préférence entre 0,2 et 20% molaires, par rapport au trioxane présent dans ce milieu.

Si l'on souhaite incorporer en outre dans les copolymères selon l'invention des groupes (C) tels que définis plus haut, dans les proportions mentionnées, il convient que le milieu de copolymérisation contienne en outre le termonomère correspondant en concentration adéquate, déterminée de la même manière que pour le comonomère ci-dessus.

A l'issue de l'étape de copolymérisation proprement dite, on ajoute généralement en milieu de polymérisation un agent neutralisant l'activité catalytique; à titre de pareil agent, on peut citer les amines aliphatiques, telles que la tributylamine par exemple. Le copolymère obtenu est ensuite généralement soumis à une hydrolyse dont le but et de décomposer les extrémités des chaînes macromoléculaires portant des groupes terminaux hydroxyles thermiquement instables. Cette hydrolyse peut s'effectuer en milieu organique, par exemple de même nature que le milieu de polymérisation; le milieu d'hydrolyse peut ainsi être le milieu même de la polymérisation. Cette hydrolyse s'effectue généralement par addition au dit milieu d'eau contenant éventuellement un composé organique ou inorganique à caractère basique tel que les hydroxydes d'ammonium et de métaux alcalins ou alcalino-terreux, les amines, les urées, les alcools, etc. Une description détaillée de modes d'hydrolyse convenables est contenue par exemple dans le brevet US-A-3 225 005 de HOECHST.

Le copolymère obtenu, séparé de son milieu de préparation ou d'hydrolyse éventuelle, est généralement lavé et séché. La stabilité thermique des copolymères oxyméthyléniques est remarquablement élevée; elle est notamment et de manière étonnante, nettement plus élevée que celle des copolymères comparables contenant des unités récurrentes oxyméthyléniques et 2-chlorométhyloxyéthyléniques.

L'invention est illustrée mais non limitée par les exemples suivants.

*Exemples 1, 2R et 3R*

(Les exemples 2R er 3R sont donnés à titre de comparaison).

Dans un ballon de 5 l, on introduit
— 985 g de trioxane purifié par cristallisation de sa solution dans le solvant organique (coupe paraffinique en $C_{7-9}$ commercialisée par ESSO sous la dénomination ISOPAR®-E) ayant servi à l'extraire de son milieu de synthèse aqueux;

— un comonomère distillé et séché sur tamis moléculaire dont la nature et la quantité utilisée sont précisées dans le tableau ci-après;

— 1000 g d'ISOPAR®-E;

— 0,125 g d'un catalyseur qui est un complexe de coordination du fluorure de bore avec l'éther diéthylique dilué dans environ 5 g d'hexane.

La polymérisation est ensuite conduite pendant 2 heures à 60°C. A la fin de cette période, le catalyseur est désactivé par injection de tributylamine au rapport molaire tributylamine/catalyseur de 5. Le milieu de polymérisation est finalement additionné d'eau à raison de deux volumes par volumes d'ISOPAR®-E et porté pendant 1 heure à 155°C.

Le copolymère obtenu, est séparé de son milieu et séché de manière conventionnelle.

Les conditions particulières des essais et leurs résultats sont consignés dans le tableau ci-après.

### TABLEAU

| Exemple | 1 | 2R | 3R |
|---|---|---|---|
| Nature du comonomère | épifluor-hydrine | oxyde d'éthylène | épichlor-hydrine |
| Quantité de comonomère utilisée (% en poids par rapport au trioxane) | 4,1 | 4 | 5 |
| Viscosité inhérente ($\eta$) du copolymère obtenu (dl/g) | 2,4 | 3,2 | 2,5 |
| Teneur du copolymère en comonomère (% molaires par rapport au trioxane) | 1,1 | 1,9 | 2,4 |
| «Stabilité base» (%) | 93,6 | 89 | 92 |

Ces exemples montrent donc que les copolymères selon l'invention (exemple 1) se caractérisent par une «stabilité base» supérieure à celle des copolymères de l'art antérieur (exemples 2R et 3R) même dans le cas où la teneur molaire en comonomère des premiers est nettement plus faible.

**Revendications pour les Etats contractants:**
BE, DE, FR, GB, IT, NL

1. Copolymères contenant des unités récurrentes oxyméthyléniques et des unités récurrentes 2-fluorométhyloxyéthyléniques.

2. Copolymères selon la revendication 1, contenant entre 0,05 et 20% molaires d'unités récurrentes 2-fluorométhyloxyéthyléniques.

3. Copolymères selon la revendication 1, contenant en outre des unités récurrentes oxyalkyléniques contenant au moins deux atomes de carbone.

4. Copolymères selon la revendication 3, caractérisés en ce que les unités récurrentes oxyalkyléniques sont des unités récurrentes oxyéthyléniques.

5. Copolymères selon la revendication 1, essentiellement constitué de 99,5 à 95% molaires d'unités récurrentes oxyméthyléniques et de 0,5 à 5% molaires d'unités 2-fluorométhyloxyéthyléniques.

6. Procédé pour la préparation de copolymères contenant des unités récurrentes oxyméthyléniques et des unités récurrentes 2-fluorométhyloxyéthylénique, caractérisé en ce que l'on copolymérise du trioxane avec au moins un comonomère choisi parmi les dérivés d'éthers cycliques dont la molécule contient au moins deux atomes de carbone adjacents et dont un groupement oxyméthylénique porte un substituant fluorométhyle.

7. Procédé pour la préparation de copolymères selon la revendication 6, caractérisé en ce que le comonomère est l'épifluorhydrine.

8. Procédé pour la préparation de copolymères selon l'une des revendications 6 ou 7, caractérisé en ce que la concentration du comonomère dans le milieu de copolymérisation est comprise entre 0,1 et 50% molaires par rapport au trioxane présente dans ce milieu.

**Revendications pour l'Etat contractant: AT**

1. Procédé pour la préparation de copolymères contenant des unités récurrentes oxyméthyléniques et des unités récurrentes 2-fluorométhyloxyéthyléniques, caractérisé en ce que l'on copolymérise du trioxane avec au moins un comonomère choisi parmi les dérivés d'éthers cycliques dont la molécule contient au moins deux atomes de carbone adjacents et dont un groupement oxyméthylénique porte un substituant fluorométhyle.

2. Procédé pour la préparation de copolymères selon la revendication 1, caractérisé en ce que le comonomère est l'épifluorhydrine.

3. Procédé pour la préparation de copolymères selon l'une des revendications 1 ou 2, caractérisé en ce que la concentration du comonomère dans le milieu de copolymérisation est comprise entre 0,1 et 50% molaires par rapport au trioxane présente dans ce milieu.

**Patentansprüche für die Vertragsstaaten:**
BE, DE, FR, GB, IT, NL

1. Copolymere enthaltend wiederkehrende Oxymethylen-Einheiten und wiederkehrende 2-Fluormethyloxyethylen-Einheiten.

2. Copolymere nach Anspruch 1, enthaltend zwischen 0,05 und 20 Mol-% wiederkehrende 2-Fluormethyloxyethylen-Einheiten.

3. Copolymere nach Anspruch 1, enthaltend außerdem wiederkehrende Oxyalkylen-Einheiten enthaltend wenigstens 2 Kohlenstoffatome.

4. Copolymere nach Anspruch 3, dadurch gekennzeichnet, daß die wiederkehrenden Oxyalkylen-Einheiten wiederkehrende Oxyethylen-Einheiten sind.

5. Copolymere nach Anspruch 1, im wesentlichen bestehend aus 99,5 bis 95 Mol-% wiederkehrender Oxymethylen-Einheiten und 0,5 bis 5 Mol-% 2-Fluormethyloxyethylen-Einheiten.

6. Verfahren zur Herstellung von Copolymeren enthaltend wiederkehrende Oxymethylen-Einheiten und wiederkehrende 2-Fluormethyloxyethylen-Einheiten, dadurch gekennzeichnet, daß man Trioxan mit mindestens einem Comonomeren, ausgewählt unter den Derivaten zyklischer Ether, deren Molekül wenigstens zwei benachbarte Kohlenstoffatome enthält und von denen eine Oxymethylen-Gruppe einen Fluormethylrest enthält, copolymerisiert.

7. Verfahren zur Herstellung von Copolymeren nach Anspruch 6, dadurch gekennzeichnet, daß das Comonomere Epifluorhydrin ist.

8. Verfahren zur Herstellung von Copolymeren nach einem der Ansprüche 6 oder 7, dadurch gekennzeichnet, daß die Konzentration des Comonomeren in dem Copolymerisationsmilieu zwischen 0,1 und 50 Mol-% in bezug auf das in dem Milieu anwesende Trioxan beträgt.

**Patentansprüche für den Vertragsstaat: AT**

1. Verfahren zur Herstellung von Copolymeren enthaltend wiederkehrende Oxymethylen-Einheiten und wiederkehrende 2-Fluormethyloxyethylen-Einheiten, dadurch gekennzeichnet, daß man Trioxan mit mindestens einem Comonomeren, ausgewählt unter den Derivaten zyklischer Ether, deren Molekül wenigstens zwei benachbarte Kohlenstoffatome enthält und von denen eine Oxymethylen-Gruppe einen Fluormethylrest enthält, copolymerisiert.

2. Verfahren zur Herstellung von Copolymeren nach Anspruch 1, dadurch gekennzeichnet, daß das Comonomere Epifluorhydrin ist.

3. Verfahren zur Herstellung von Copolymeren nach einem der Ansprüche 1 oder 2, dadurch gekennzeichnet, daß die Konzentration des Comonomeren in dem Copolymerisationsmilieu zwischen 0,1 und 50 Mol-% in bezug auf das in dem Milieu anwesende Trioxan beträgt.

**Claims for the Contracting States:**
BE, DE, FR, GB, IT, NL

1. Copolymers containing oxymethylene repeat units and 2-fluoromethoxyethylene repeat units.

2. Copolymers according to Claim 1, containing between 0.05 and 20 mol% of 2-fluoromethoxyethylene repeat units.

3. Copolymers according to Claim 1, additionally containing oxyalkylene repeat units containing at least two carbon atoms.

4. Copolymers according to Claim 3, characterized in that the oxyalkylene repeat units are oxyethylene repeat units.

5. Copolymers according to Claim 1, consisting substantially of 99.5 to 95 mol% of oxymethylene repeat units and 0.5 to 5 mol% of 2-fluoromethoxyethylene units.

6. Process for the praparation of copolymers containing oxymethylene repeat units and 2-fluoromethoxyethylene repeat units, characterized in that trioxane is copolymerized with at least one comonomer chosen from derivatives of cyclic ethers whose molecule contains at least two adjacent carbon atoms and in which an oxymethylene group carries a fluoromethyl substituent.

7. Process for the preparation of copolymers according to Claim 6, characterized in that the comonomer is epifluorohydrin.

8. Process for the preparation of copolymers according to either of Claims 6 or 7, characterized in that the concentration of the comonomer in the copolymerisation medium is between 0.1 and 50 mol% relative to the trioxane present in this medium.

**Claims for the Contracting State: AT**

1. Process for the praparation of copolymers containing oxymethylene repeat units and 2-fluoromethoxyethylene repeat units, characterized in that trioxane is copolymerized with at least one comonomer chosen from derivatives of cyclic ethers whose molecule contains at least two adjacent carbon atoms and in which an oxymethylene group carries a fluoromethyl substituent.

2. Process for the preparation of copolymers according to Claim 1, characterized in that the comonomer is epifluorohydrin.

3. Process for the preparation of copolymers according to either of Claims 1 or 2, characterized in that the concentration of the comonomer in the copolymerisation medium is between 0.1 and 50 mol% relative to the trioxane present in this medium.